(19) Europäisches Patentamt
European Patent Office
Office européen des brevets

(11) **EP 0 979 987 B1**

(12) **EUROPÄISCHE PATENTSCHRIFT**

(45) Veröffentlichungstag und Bekanntmachung des Hinweises auf die Patenterteilung:
**10.09.2008 Patentblatt 2008/37**

(51) Int Cl.:
***G01C 21/34*** *(2006.01)*

(21) Anmeldenummer: **99111285.5**

(22) Anmeldetag: **10.06.1999**

(54) **Verfahren zum Bestimmen einer Route von einem Ausgangspunkt zu einem Zielpunkt**

Method of determining a route from a point of origin to a destination

Méthode pour déterminer une route d'un point de départ à un point d'arrivée

(84) Benannte Vertragsstaaten:
**DE FR GB IT**

(30) Priorität: **12.08.1998 DE 19836485**

(43) Veröffentlichungstag der Anmeldung:
**16.02.2000 Patentblatt 2000/07**

(73) Patentinhaber: **ROBERT BOSCH GMBH**
**70442 Stuttgart (DE)**

(72) Erfinder: **Fabian, Thomas**
**31139 Hildesheim (DE)**

(56) Entgegenhaltungen:
**EP-A- 0 782 120     EP-A- 0 847 034**
**US-A- 4 984 168**

**Beschreibung**

Technisches Gebiet

Die Erfindung betrifft ein Verfahren zum Bestimmen einer Route von einem Ausgangspunkt zu einem Zielpunkt auf einem Routennetz, insbesondere einem Straßennetz, weiches als gerichtete Kanten und Knoten in einem Speicher abgebildet ist, wobei jeder Kante ein Streckenwiderstand zugeordnet wird, wobei die Route als eine Reihe von Kanten derart bestimmt wird, daß die Summe aller Streckenwiderstände minimal wird, gemäß dem Oberbegriff des Anspruchs 1.

Stand der Technik

In Fortbewegungsmitteln, wie beispielsweise Kraftfahrzeugen, Flugzeugen oder Schiffen, fest installierte Navigationssysteme leiten einen Führer des Fortbewegungsmittels schnell, einfach und sicher an einen gewünschten Zielort, ohne daß dieser vorher aufwendig eine Route planen und entsprechendes Kartenmaterial erwerben bzw. studieren muß. Hierzu liegen entsprechende, beispielsweise auf Karten, Landkarten oder Straßenkarten basierende, Navigationsdaten in dem Navigationssystem beispielsweise auf CD-ROM gespeichert vor. Das Navigationsgerät nutzt beispielsweise GPS (Global Positioning System) um einen momentanen Standort festzustellen und entsprechende Navigationsanweisungen zu berechnen, welche zu einem vorbestimmten Ziel führen. Die Navigationsdaten beinhalten dabei vorzugsweise Daten über Straßen und Wege für Kraftfahrzeuge.

Dabei kommen in den Navigationssystemen entsprechende Algorithmen zur Routenberechnung zum Einsatz, welche aus der Vorgabe eines Ausgangspunktes und eines Zielpunktes zusammen mit den gespeicherten Navigationsdaten eine optimale Route zur Fahrt vom Ausgangspunkt zum Zielpunkt errechnen. Derartige Algorithmen zur Routenberechnung stützen sich beispielsweise auf sogn. Bestwege-Algorithmen nach Ford, Moore, welche aus der Graphentheorie bekannt sind und an die besonderen Anforderungen für den Einsatz in autarken Fahrzeugnavigationssystemen angepaßt wurden. Siehe hierzu das Dokument US-A-4 984 168.

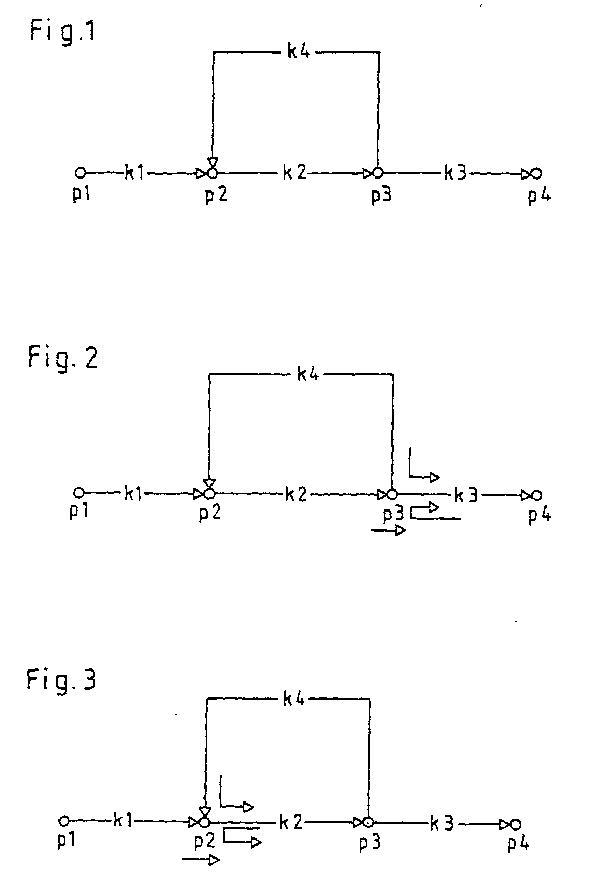

Wie aus Fig. 1 ersichtlich, wird das Straßennetz zur mathematischen Bearbeitung durch einen Routensuchalgorithmus als Graph mit Kanten k und Knoten p dargestellt, wobei die Kanten entsprechende Straßen und die Knoten entsprechende Vermaschungspunkte der Straßen bzw. des Straßennetzes repräsentieren. In der Fig. 1 sind vier Kanten $k_1$, $k_2$, $k_3$ und $k_4$ sowie vier Knoten $p_1$, $p_2$, $p_3$ und $p_4$ vorgesehen. Da im realen Straßenverkehr der Verkehrsfluß gerichtet ist, muß auch eine Kante k als gerichteter Vektor dargestellt werden. Den Kanten k werden ferner Widerstände, sogn . Streckenwiderstände, zugeordnet, welche eine Meßgröße für einen Aufwand darstellt, von einem Knoten im Netz zu einem anderen zu fahren. Beispielsweise wird die Kantenlänge als Streckenwiderstand verwendet. Alternativ kann auch, unter Einbeziehung einer mittleren Verkehrsgeschwindigkeit, eine Fahrzeit auf einer Kante als ihr jeweiliger Streckenwiderstand betrachtet werden. In einer weiteren Alternative ist eine Kostenfunktion vorgesehen, die eine gewichtete Mischkalkulation von verschiedenen Eigenschaften, wie beispielsweise Kantenlänge, Fahrzeit auf einer Kante oder Breite (Ausbauzustand) einer Kante, ermöglicht. Zusätzlich wird den jeweiligen Knoten optional ein Widerstand zugeordnet, der Kosten für Fahrmanöver (gerade aus, links/rechts, abbiegen, wenden etc) widerspiegelt. Alle Bestwege-Algorithmen bestimmen letztlich eine Route zwischen einer Startkante und einer Zielkante im gerichteten Graphen mit der Eigenschaft, daß die Summe aller Streckenwiderstände der Kanten der ermittelten Route und ggf. der berücksichtigten Knotenwiderstände minimal ist.

Derartige Bestwege-Algorithmen arbeiten zur Routenberechnung rückwärtsiterierend und besuchen alle Kanten im Graphen und bewertet sie in bezug auf die günstigsten Wege zur Zielkante. Mit anderen Worten wird, ausgehend von einer Zielkante, rückwärts in jedem Iterationsschritt ein widerstandsmäßig günstiger Weg zu in der Liste aufgeführten Kanten gesucht, welche im vorherigen Iterationsschritt optimiert wurden. Als Ergebnis liefert das Verfahren von jeder Kante im Graphen eine optimale Route zur Zielkante. Zur Darstellung der Berechnungsergebnisse wird in einem Speicher des Navigationsgerätes eine sogn. Routentabelle angelegt. Eine derartige Tabelle würde beispielhaft für den in Fig. 1 dargestellten Graphen folgendermaßen aussehen.

Routentabelle

| Kante | +Widerstand | +Nachfolgekante | -Widerstand | -Nachfolgekante |
|---|---|---|---|---|
| $k_1$ | ∞ | - | ∞ | - |
| $k_2$ | ∞ | - | ∞ | - |
| $k_3$ | ∞ | - | ∞ | - |
| $k_4$ | ∞ | - | ∞ | - |

Für jede Kante im Graphen ist in der Tabelle der Widerstand bis zur Zielkante und die in Zielrichtung folgende Nachfolgekante angegeben. Als Initialisierungswert ist der Widerstand auf "unendlich" (Symbol ∞) und die Nachfolgekante auf "undefiniert" (Symbol -) gesetzt. Ein positives Vorzeichen in der Widerstand- und Nachfolgerspalte steht für die Betrachtung der jeweiligen Kante in ihrer Pfeilrichtung, wogegen ein negatives Vorzeichen für die Betrachtung der jeweiligen Kante entgegen ihrer Pfeilrichtung steht.

Vor dem Start der iterativen Optimierung ist die Zielkante in der Routentabelle mit dem Widerstand Null initialisiert (siehe oben). Als Beispiel einer Zielkante soll hier die Kante $k_3$ dienen. Es ergibt sich dann für eine Zielinitialisierung folgendes Aussehen für die gespeicherte Routentabelle.

Routentabelle

| Kante | +Wderstand | +Nachfolgekante | -Widerstand | -Nachfolgekante |
|-------|-----------|-----------------|-------------|-----------------|
| $k_1$ | ∞ | - | ∞ | - |
| $k_2$ | ∞ | - | ∞ | - |
| $k_3$ | 0 | - | 0 | - |
| $k_4$ | ∞ | - | ∞ | - |

Ferner ist die Zielkante $k_3$ in einer im Navigationsgerät gespeicherten Liste der bereits optimierten Kanten eingetragen, so daß sich eine Liste der bereits optimierten Kanten gemäß folgender Liste 1 ergibt.

Liste 1 (Liste der bereits optimierten Kanten)

| $+k_3$ | | | | |
|---|---|---|---|---|

Ferner ist eine zweite Liste zur Speicherung der im nächsten Optimierungsschritt zu prüfenden Kanten vorgesehen, welche zu Beginn des Verfahrens leer ist, gemäß nachfolgender Liste 1.

Liste 2 (Liste der im nächsten Schritt zu prüfenden Kanten)

| | | | | |
|---|---|---|---|---|

Das Verfahren startet jetzt, indem es alle in der Liste 1 aufgeführten Kanten als fiktive Istposition des Fahrzeugs betrachtet und alle mit dieser "Ist-Kante" vermaschten Kanten, die sogn. "Ankommer-Kanten", einer Optimierungsprüfung unterzieht. In dem genannten Beispiel (vgl. Fig. 1) lauten die mit der Ist-Kante $+k_3$ vermaschten Kanten $+k_2$, $-k_3$ und $-k_4$ (=Ankommer-Kanten). In der Optimierungsprüfung wird nun der Widerstand einer jeweiligen Ankommer-Kante zum Ziel mit dem Widerstand verglichen, den die Ankommer-Kante haben würde, wenn sie über die Ist-Kante zum Ziel führen würde. Hierbei lautet einen sogn. Widerstandsoptimierungsbedingung

Widerstand(Ankommer-Kante) > Streckenwiderstand(Ankommer-Kante) + Widerstand(Ist-Kante)

Hierbei bezeichnet "Widerstand" den in der Routentabelle eingetragenen Widerstand und "Streckenwiderstand" einen im Graphen (vgl. Fig. 1) der jeweiligen Kante zugeordneten Streckenwiderstand. Ist diese Widerstandsoptimierungsbedingung erfüllt, so wird der Widerstand der Ankommer-Kante in der Routentabelle durch den neuen, kleineren Wert ersetzt, als Nachfolgekante die Ist-Kante eingetragen und die optimierte Ankommer-Kante in die Liste 2 aufgenommen. Sind alle Kanten aus der Liste 1, wie beschrieben, bearbeitet worden, so werden die Liste 1 und die Liste 2 vertauscht und anschließend wird die Liste 2 geleert. Das Verfahren terminiert, wenn die Liste 1 leer aufgefunden wird.

Nachfolgend soll dieses Verfahren zur weiteren Erläuterung auf das Straßennetz gemäß Fig. 1 angewendet werden. Hierzu ist den Kanten $k_1$, $k_2$ und $k_3$ im Beispielnetz von Fig. 1 der Streckenwiderstand 10 und der Kante k4 der Streckenwiderstand 30 zugewiesen. Da für dieses Verfahren sogn. Abbiegewiderstände nicht von Bedeutung sind, bleiben diese in dem vorliegenden Beispiel unberücksichtigt. In Schritt 1 ist die aktuelle Ist-Kante = $+k_3$ gesetzt und die Liste 1 hat folgenden Inhalt:

Liste 1 (Liste der bereits optimierten Kanten)

| $+k_3$ | | | | |
|---|---|---|---|---|

Nun werden alle Ankommer-Kanten von $k_3$ auf die Widerstandsoptimierungsbedingung hin geprüft, wie auch in Fig. 2 illustriert. Es ergeben sich folgende Inhalte der jeweiligen Widerstandsoptimierungsbedingung:

$-k_3$: $0 > 10 + 0$ Widerstandsoptimierungsbedingung nicht erfüllt
$+k_2$: $\infty > 10 + 0$ Widerstandsoptimierungsbedingung erfüllt
$-k_4$: $\infty > 30 + 0$ Widerstandsoptimierungsbedingung erfüllt

Es ergeben sich am Ende des Schrittes 1 folgende Inhalte für die Liste 2 und die Routentabelle:

Liste 2 (Liste der im nächsten Schritt zu prüfenden Kanten)

| $+k_2$ | $-k_4$ | | | |
|---|---|---|---|---|

Routentabelle

| Kante | +Widerstand | +Nachfolgekante | -Widerstand | -Nachfolgekante |
|---|---|---|---|---|
| $k_1$ | $\infty$ | - | $\infty$ | - |
| $k_2$ | 10 | $+k_3$ | $\infty$ | - |
| $k_3$ | 0 | - | 0 | - |
| $k_4$ | $\infty$ | - | 30 | $+k_3$ |

Nun werden die Listen 1 und 2 vertauscht und die Liste 2 geleert. Der Schritt 2 beginnt mit einer neuen Liste 1 mit folgendem Inhalt:

Liste 1 (Liste der bereits optimierten Kanten)

| $+k_2$ | $-k_4$ | | | |
|---|---|---|---|---|

In Schritt 2.1 werden alle Ankommer-Kanten der Kante $+k_2$ auf die Widerstandsoptimierungsbedingung hin geprüft, wie auch in Fig. 3 illustriert, und es ergeben sich folgende Inhalte der Routentabelle und der Liste 2:

Liste 2 (Liste der im nächsten Schritt zu prüfenden Kanten)

| $+k_1$ | $+k_4$ | $-k_2$ | | |
|---|---|---|---|---|

Routentabelle

| Kante | +Widerstand | +Nachfolgekante | -Widerstand | -Nachfolgekante |
|---|---|---|---|---|
| $k_1$ | 20 | $+k_2$ | $\infty$ | - |
| $k_2$ | 10 | $+k_3$ | 20 | $+k_2$ |
| $k_3$ | 0 | - | 0 | - |
| $k_4$ | 40 | $+k_2$ | 30 | $+k_3$ |

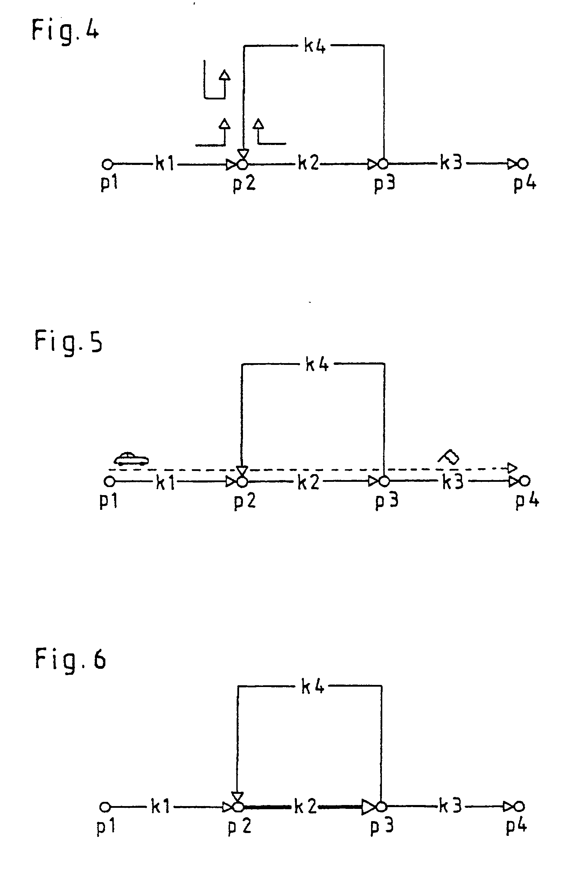

In einem nachfolgende Schritt 2.2 werden alle Ankommer-Kanten der Kante $-k_4$ auf die Widerstandsoptimierungsbedingung hin geprüft, wie auch in Fig. 4 illustriert, und es ergeben sich folgende Inhalte der Routentabelle und der Liste 2:

Liste 2 (Liste der im nächsten Schritt zu prüfenden Kanten)

| $+k_1$ | $+k_4$ | $-k_2$ | | |
|---|---|---|---|---|

Routentabelle

| Kante | +Widerstand | +Nachfolgekante | -Widerstand | -Nachfolgekante |
|---|---|---|---|---|
| $k_1$ | 20 | $+k_2$ | $\infty$ | - |
| $k_2$ | 10 | $+k_3$ | 20 | $+k_2$ |
| $k_3$ | 0 | - | 0 | - |
| $k_4$ | 40 | $+k_2$ | 30 | $+k_3$ |

Nun werden wieder die Listen 1 und 2 vertauscht und die Liste 2 geleert. Der nächste Schritt 3 beginnt dann mit einer Liste 1 mit folgendem Inhalt:

Liste 1 (Liste der bereits optimierten Kanten)

| $+k_1$ | $+k_4$ | $-k_2$ | | |
|---|---|---|---|---|

Die Iteration erfolgt nun Schritt um Schritt weiter, bis nach Terminierung des Algorithmus die Routentabelle folgende Inhalt hat:

Routentabelle

| Kante | +Widerstand | +Nachfolgekante | -Widerstand | -Nachfolgekante |
|---|---|---|---|---|
| $k_1$ | 20 | $+k_2$ | 30 | $+k_1$ |
| $k_2$ | 10 | $+k_3$ | 20 | $+k_2$ |
| $k_3$ | 0 | - | 0 | - |
| $k_4$ | 40 | $+k_2$ | 30 | $+k_3$ |

Somit erhält gemäß dieser Routentabelle die Kante $+k_1$ die Nachfolgerkante $+k_2$, die Kante $+k_2$ die Nachfolgerkante $+k_3$ und die Kante $+k_3$ keine Nachfolgerkante, d.h. Ziel erreicht. Diese ermittelte Route ist in Fig. 5 mit einem gestrichelten Pfeil illustriert.

Es kommt jedoch häufig vor, daß beispielsweise ein Kraftfahrer ungern Autobahnen fährt oder aus Kostengründen Fähren und/oder mautpflichtige Paßstraßen vermeiden möchte. Auch ist es denkbar, daß ein Kraftfahrer Tunnelfahrten so weit wie möglich vermeiden will. Bisherige Routenberechnungen berücksichtigen diesen Wunsch jedoch nicht oder nur sehr aufwendig, indem direkt die Widerstandswerte der jeweiligen Kanten entsprechend erhöht werden. Dies führt jedoch nicht immer zu einem gewünschten Ergebnis, da durch das direkte Verändern der Widerstandswerte entsprechender Kanten diese im wesentlichen ausgeblendet werden. Die Topographie und Straßenführung läßt jedoch oftmals keine Route oder nur eine mit großen Umwegen behaftete Route zu, welche tatsächlich keine der ausgeschlossenen Arten von Verkehrswegen enthält. Oftmals enden herkömmliche Routenberechnung wegen des Ausschlusses zu vieler Kanten ohne Ergebnis. Umgekehrt kann es vorkommen, daß die berechnete Route aufgrund anderer Einflüsse doch über eine eigentlich ausgeschlossene Kante führt, weil die Erhöhung des Streckenwiderstandes dieser Kante nicht ausreichte. Tatsächlich wäre es wünschenswert beispielsweise statt eines Ausschlusses alle Kanten mit Autobahn lediglich eine Route mit minimierter Autobahnstrecke zu berechnen. Dazu sind jedoch bisher bekannte Navigationsgeräte nicht in der Lage.

Ferner ist die Beeinflussung der Streckenwiderstände deshalb nachteilig, da dieser Streckenwiderstand auch zu anderen Zwecken, insbesondere bei der Verkehrstelematik, manipuliert wird. Somit sind diese Verfahren in ihrer Auswirkung auf die Routensuche nicht mehr vorhersehbar.

Darstellung der Erfindung, Aufgabe, Lösung, Vorteile

Es ist Aufgabe der vorliegenden Erfindung, ein verbessertes Verfahren der obengenannten Art zur Verfügung zu stellen, welches die obengenannten Nachteile beseitigt und bei einer Routenberechnung eine gewünschte selektive Minimierung von vorbestimmten Verkehrswegen zuläßt.

Diese Aufgabe wird durch ein Verfahren der o.g. Art mit den in Anspruch 1 gekennzeichneten Merkmalen gelöst.

Dazu ist es bei einem Verfahren der o.g. Art erfindungsgemäß vorgesehen, daß jeder Kante zusätzlich wenigstens ein Verkehrswegeart-Streckenwert zugeordnet wird, wobei bei der Bestimmung der Route von einer Kante zur nächsten Kante primär der Verkehrswegeart-Streckenwert minimiert wird und lediglich in dem Fall, daß sich dieser Verkehrswegeart-Streckenwert von einer Kante zur nächsten weder erhöht noch erniedrigt an dieser Stelle eine Minimierung des Streckenwiderstandes durchgeführt wird.

Dies hat den Vorteil, daß als Ergebnis dieses Verfahrens immer eine Route erzielt wird, welche eine minimale Nutzung der zu meidenden Streckenabschnitte, wie beispielsweise Autobahnen oder Paßstraßen, aufweist. Dabei können auf einfache Weise verschiedene unerwünschte Verkehrswegearten gleichzeitig kombiniert bei der Routenberechnung berücksichtigt werden. Ferner ist eine einfache Kombination bereits bekannter Verfahren möglich, welche mittels einer straßenklassenabhängigen Streckenwiderstandsbildung eine "kurze Route" oder eine "schnelle Route" berechnen. Da erfindungsgemäß die Streckenwiderstände für die Minimierung vorbestimmter Streckenarten nicht angetastet werden, bleiben diese für andere Eingriffe zur Routendynamisierung frei, wie beispielsweise für die Verkehrstelematik.

Vorzugsweise Weitergestaltungen des Verfahrens sind in den Ansprüchen 2 bis 5 beschrieben.

Beispielsweise gibt der Verkehrswegeart-Streckenwert die Summe aller Strecken an, auf der diese Kante eine vorbestimmte Verkehrswegeart aufweist, wie beispielsweise eine Autobahn, eine Landstraße, eine Fähre, eine Paßstraße, und/oder einen Tunnel und/oder ähnliches. Dies hat den weiteren Vorteil, daß die Summe aller Verkehrswegeart-Streckenwerte der berechneten Route direkt die Länge der in der berechneten Route verbliebenen, unerwünschten Streckenabschnitte angibt. Sofern dieser beispielsweise nach der Routenberechnung dem Benutzer angezeigt wird, kann dieser selbst nachprüfen, inwieweit die von ihm vorgegebenen Kriterien für zu meidende Streckenabschnitte bzw. seine Routenoptionen eingehalten werden. Eine weitere vorteilhafte Ausprägung des Verkehrswegeart-Streckenwertes ist die Erfassung von Häufigkeiten, wie beispielsweise Anzahl von Verkehrsunfällen, Anzahl von Radarfallen oder Ampeln, die ggf. einer Kante zugeordnet sind. Der Verkehrswegeart-Streckenwert dient ggf. auch der Erfassung anderer physikalischer Eigenschaften, wie beispielsweise Schadstoffemissionen, die einer Kante zugeordnet werden, um bei der Routenwahl smoggefährdete Gebiete zu meiden. Die einer Kante für die Erfassung im Verkehrswegeart-Streckenwert zugeordneten Eigenschaften werden optional mittels Verkehrstelematik direkt beispielsweise von einem Serviceprovider online beispielsweise via GSM in ein Navigationsgerät eingespielt. Hierbei wird beispielsweise ein Polygon übertragen, das einen Bereich auf der digitalen Karte markiert, innerhalb dessen allen Kanten eine vorbestimmte Eigenschaft zugewiesen wird.

Zweckmäßigerweise wird die Berücksichtigung wenigstens eines Verkehrswegeart-Streckenwertes bei der Routenberechnung von einem Benutzer wahlweise aktiviert oder deaktiviert.

Die Routenberechnung erfolgt beispielsweise iterativ ausgehend von der Zielkante.

In einer besonders bevorzugten Ausführungsform umfaßt das Verfahren folgende Schritte:

(1) Erstellen einer Routentabelle, in der für jede gerichtete Kante in Vorwärtsrichtung und Rückwärtsrichtung je ein Widerstand, je eine Nachfolgerkante und je ein Verkehrswegeart-Wert eintragbar ist,
(2) Setzen aller Widerstandswerte sowie aller Verkehrswegeart-Werte der Routentabelle auf unendlich und Löschen aller Nachfolgekanten,
(3) Setzen der Widerstandswerte und der Verkehrswegeart-Werte der Zielkante auf Null,
(4) Speichern der Zielkante in einer ersten Liste für bereits optimierte Kanten,
(5) Erstellen einer leeren zweiten Liste für im nächsten Schritt zu optimierende Kanten,
(6) Bestimmen, ob die erste Liste leer ist, wenn ja Beenden des Verfahrens,
(7) Setzten einer Kante aus der ersten Liste als Ist-Kante,
(8) Bestimmen aller mit der Ist-Kante vermaschten Kanten als Ankommer-Kanten,
(9) Bestimmen für alle Ankommer-Kanten ob eine Optimierungsbedingung

Verkehrswegeart-Wert(Ankommer-Kante) >

Verkehrswegeart-Streckenwert(Ankommer-Kante)+     Verkehrswegeart-Wert(Ist-Kante)

erfüllt ist, und wenn ja, Gehen zu Schritt (10), wenn nein, Gehen zu Schritt (11),
(10) Eintragen der jeweiligen Ankommer-Kante in die zweite Liste, Setzen des Widerstandswertes der jeweiligen Ankommer-Kante in der Routentabelle auf die Summe (Streckenwiderstand(Ankommer-Kante)+Widerstand(Ist-Kante)), Setzen des Verkehrswegeart-Wertes der jeweiligen Ankommer-Kante in der Routentabelle auf die Summe (Verkehrswegeart-Streckenwert(Ankommer-Kante)+ Verkehrswegeart-Wert(Ist-Kante)) und Eintragen der Ist-Kante als Nachfolgerkante der jeweiligen Ankommer-Kante, Gehen zu Schritt (12),

(11) Verwerfen der jeweiligen Ankommer-Kante, wenn

$$\text{Verkehrswegeart-Wert(Ankommer-Kante)} <$$
$$\text{Verkehrswegeart-Streckenwert(Ankommer-Kante)+ Verkehrswegeart-Wert(Ist-Kante)}$$

ist, oder wenn

$$\text{Verkehrswegeart-Wert(Ankommer-Kante)} =$$
$$\text{Verkehrswegeart-Streckenwert(Ankommer-Kante)+ Verkehrswegeart-Wert(Ist-Kante)}$$

ist, Bestimmen für die jeweilige Ankommer-Kante, ob eine Optimierungsbedingung

$$\text{Widerstand(Ankommer-Kante)} >$$
$$\text{Streckenwiderstand(Ankommer-Kante)+ Widerstand(Ist-Kante)}$$
$$\text{erfüllt ist,}$$

- wenn ja, Eintragen der jeweiligen Ankommer-Kante in die zweite Liste, Setzen des Widerstandswertes der jeweiligen Ankommer-Kante in der Routentabelle auf die Summe (Streckenwiderstand(Ankommer-Kante)+Widerstand(Ist-Kante)), Setzen des Verkehrswegeart-Wertes der jeweiligen Ankommer-Kante in der Routentabelle auf die Summe (Verkehrswegeart-Streckenwert(Ankommer-Kante)+ Verkehrswegeart-Wert(Ist-Kante)) und Eintragen der Ist-Kante als Nachfolgerkante der jeweiligen Ankommer-Kante,
- wenn nein, Verwerfen der Ankommer-Kante,

(12) Setzten einer anderen Kante aus der ersten Liste als Ist-Kante und Gehen zu Schritt (8) oder Gehen zu Schritt (13), wenn bereits alle in der ersten Liste enthaltenen Kanten als Ist-Kante gesetzt wurden,

(13) Vertauschen der ersten Liste mit der zweiten Liste, Leeren der zweiten Liste und Gehen zu Schritt (6).

## Kurze Beschreibung der Zeichnungen

Nachstehend wird die Erfindung anhand der beigefügten Zeichnung näher erläutert. Diese zeigt in

Fig. 1 bis 9 jeweilige Abbildung eines Straßennetzes als gerichtete Kanten und Knoten,

Fig. 10 ein Flußdiagramm einer bevorzugten Ausführungsform des erfindungsgemäßen Verfahrens,

Fig. 11 ein Flußdiagramm des Details I von Fig. 10 und

Fig. 12 ein Flußdiagramm des Details II von Fig. 10.

## Bester Weg zur Ausführung der Erfindung

Die nachfolgenden Erläuterungen des erfindungsgemäßen Verfahrens sollen von den Fig. 6 bis 12 illustrativ unterstützt werden, wobei von der oben unter Bezugnahme auf die Fig. 1 bis 5 erläuterten Situation einer Abbildung eines realen Straßennetzes als ein Netzwerk von Knoten p und Kanten k ausgegangen und die dortige Terminologie übernommen wird.

Erfindungsgemäß ist eine zusätzliche Routenoption vorgesehen, mittels derer vorbestimmbare Streckenabschnitte bzw. Kanten bei der Routenberechnung vermieden werden. Dazu wird jeder Kante zusätzlich ein routenoptions-relevanter Streckenanteil, nachfolgend kurz als "ROSA-Wert" oder "Verkehrswegeart-Streckenwert" bezeichnet, zugeordnet. Dieser Wert kennzeichnet beispielsweise in Meter die Länge von vorbestimmten Verkehrswegearten auf dieser Kante, wie beispielsweise Autobahn, Bundesstraße, Landstraße, Staatsstraße, Gemeindestraße, Tunnel, Unterführung, Paßstraße, gefährliche Strecke, kurvige Strekke, unfallgefährdete Strecke, Strecke mit Baustelle, Strecke mit vorbestimmter Geschwindigkeitsbeschränkung, Brücke, staugefährdete Strecke und/oder Ortsdurchfahrt oder ähnliches. Dieser ROSA-Wert wird dabei für jede Kante in und entgegen ihrer Pfeilrichtung (+ROSA,-ROSA) verwaltet. Die Verkehrswegearten stehen einem Benutzer beispielsweise als vor der Routenberechnung frei wählbare bzw. aktivierbare/deaktivierbare Routenoptionen zur Verfügung.

Der ROSA-Wert einer berechneten Route gibt somit die Summe aller zu meidenden Längenanteile bis zur Zielkante an. Sind beispielsweise die Routenoptionen "meide Fähren" und "meide Autobahn" aktiviert und weist eine Kante einen ROSA-Wert von 1000m auf, dann bedeutet dies, daß 1000m dieser Kante auf Fähr- und/oder Autobahnstrecken zurückgelegt werden müssen, um zum gewünschten Ziel zu gelangen.

Ein wesentlicher Kern der Erfindung liegt darin, daß das Verfahren eine Route berechnet, welche im Vergleich zu allen anderen Alternativrouten einen minimalen ROSA-Wert aufweist.

Das erfindungsgemäße Verfahren verwaltet in der Routentabelle zusätzlich zwei Spalten für die ROSA-Werte jeweiliger Kanten in und entgegen Pfeilrichtung. Zur begrifflichen Klarstellung sei hier explizit erwähnt, daß "Widerstand" bzw. "Verkehrswegeart-Wert" bzw. "ROSA-Wert" einen in der Routentabelle eingetragenen Wert bezeichnet, wogegen "Streckenwiderstand" bzw. "Verkehrswegeart-Streckenwert" bzw. "ROSA-Streckenwert" einen einer Kante zugewiesenen Wert in der Abbildung des Routennetzes als Kanten und Knoten bezeichnet.

Bei der Initialisierung des erfindungsgemäßen Verfahrens werden die ROSA-Werte aller Kanten auf unendlich (Symbol ∞) gesetzt. Die Zielkante erhält die Rosa- und Widerstandswerte Null. Bei dem oben unter Bezug auf Fig. 1 bis 5 erläuterten Beispiel würde sich somit folgende Routentabelle nach er Initialisierung ergeben:

Routentabelle

| Kante | +Widerstand | +ROSA | +Nachfolgerkante | -Widerstand | -ROSA | -Nachfolgerkante |
|-------|-------------|-------|------------------|-------------|-------|------------------|
| $k_1$ | ∞ | ∞ | - | ∞ | ∞ | - |
| $k_2$ | ∞ | ∞ | - | ∞ | ∞ | - |
| $k_3$ | 0 | 0 | - | 0 | 0 | - |
| $k_4$ | ∞ | ∞ | - | ∞ | ∞ | - |

Ferner sei die Zielkante wiederum $+k_3$, welche als Ausgangspunkt der iterativen Routenberechnung in eine erste Liste für bereits optimierte Kanten eingetragen wird.

Liste 1 (Liste der bereits optimierten Kanten)

| $+k_3$ | | | | |
|--------|--|--|--|--|

Ferner steht eine zweite Liste für im nächsten Schritt zu prüfende Kanten zur Verfügung. Diese zweite Liste ist nach der Initialisierung leer.

Liste 2 (Liste der im nächsten Schritt zu prüfenden Kanten)

| | | | | |
|--|--|--|--|--|

Erfindungsgemäß wird nun vor der Optimierungsprüfung des Widerstandes eine zusätzliche Optimierungsprüfung des ROSA-Wertes der jeweils geprüften Ankommer-Kanten mit folgender Optimierungsbedingung durchgeführt:

ROSA-Wert(Ankommer-Kante) > ROSA-Streckenwert(Ankommer-Kante) + ROSA-Wert(Ist-Kante)

Hierbei bestimmt sich der ROSA-Streckenwert einer Ankommer-Kante aus der Summe aller auf dieser Kante als zu meidend vorbestimmte Streckenabschnitte oder Verkehrswegearten. Es sei explizit darauf hingewiesen, daß vorliegend die Begriffe "ROSA-WERT" bzw. "ROSA-Streckenwert" und "Verkehrswegeart-Wert" bzw.

" Verkehrswegeart-Streckenwert" synonym zu betrachten sind.

Wenn die ROSA-Optimierungsbedingung erfüllt ist, dann wird die Ankommer-Kante unabhängig davon, ob ihr Widerstand zum Ziel steigt oder nicht, optimiert. Mit anderen Worten wird der ROSA-Wert der Ankommer-Kante in der Routentabelle durch den neuen, niedrigeren Wert ersetzt, der Widerstand der Ankommer-Kante wird in der Routentabelle aktualisiert, als Nachfolgerkante wird in der Routentabelle die Ist-Kante eingetragen und die optimierte Ankommer-Kante wird in die zweite Liste eingetragen.

Wenn die ROSA- Optimierungsbedingung nicht erfüllt ist, dann werden zwei Fälle unterschieden.

Es erfolgt eine Prüfung der Widerstandsoptimierungsbedingung, wenn

$$\text{ROSA-Wert(Ankommer-Kante)} = \text{ROSA-Streckenwert(Ankommer-Kante)} + \text{ROSA-Wert(Ist-Kante)}$$

oder die Ankommer-Kante wird als nicht optimierbar verworfen und es wird mit der nächsten zu prüfenden Ankommer-Kante fortgesetzt, wenn

$$\text{ROSA-Wert(Ankommer-Kante)} < \text{ROSA-Streckenwert(Ankommer-Kante)} + \text{ROSA-Wert(Ist-Kante)}$$

Nachfolgend soll das erfindungsgemäße Verfahren anhand eines Beispieles näher erläutert werden, welches jedoch lediglich eine nicht einschränkende Illustration zum besseren Verständnis darstellen soll.

Es sei die Routenoption "meide Autobahnen" aktiv und es sollen die Widerstandsannahmen des Beispieles von Fig. 1 bis 5 gelten, nämlich die Streckenwiderstände von $k_1, k_2, k_3$ seien 10 und der Streckenwiderstand von $k_4$ sei 30. Die Kante $k_2$ soll eine Autobahn beinhalten und ihr ROSA-Streckenwert betrage 10m. Die Zielkante sei $+k_3$. Diese Situation ist in Fig. 6 dargestellt.

Schritt 1 geht von folgender ersten Liste aus:

Liste 1 (Liste der bereits optimierten Kanten)

| $+k_3$ | | | | |
|---|---|---|---|---|

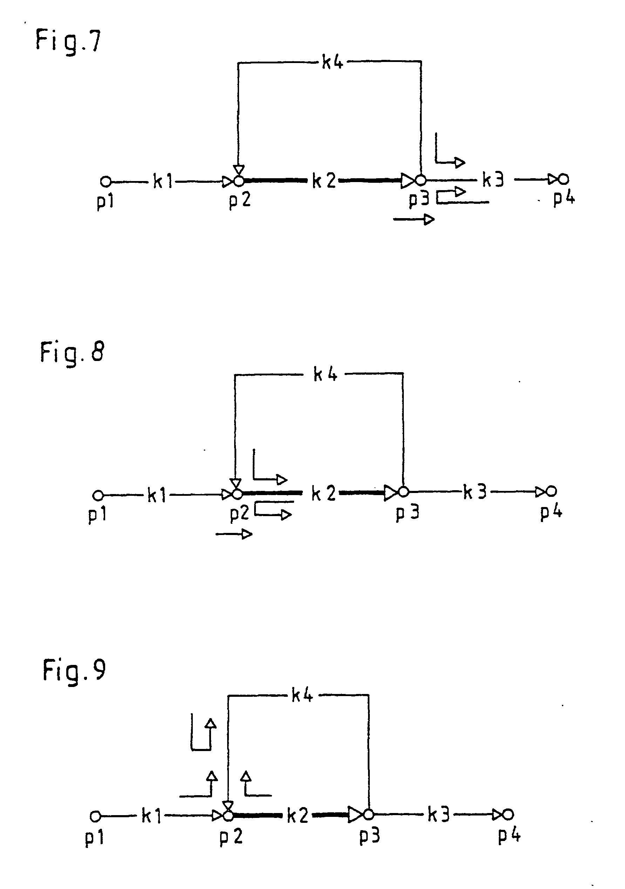

Nun werden alle Ankommer-Kanten von $k_3$ auf die ROSA-Optimierungsbedingung hin geprüft, wie auch in Fig. 7 illustriert. Es ergeben sich folgende Inhalte der jeweiligen ROSA-Optimierungsbedingung:

$-k_3$: 0 > 10 + 0 ROSA-Optimierungsbedingung nicht erfüllt
$+k_2$: ∞ > 10 + 0 ROSA-Optimierungsbedingung erfüllt
$-k_4$: ∞ > 0 + 0 ROSA-Optimierungsbedingung erfüllt

Es ergeben sich am Ende des Schrittes 1 folgende Inhalte für die Liste 2 und die Routentabelle:

Liste 2 (Liste der im nächsten Schritt zu prüfenden Kanten)

| $+k_2$ | $-k_4$ | | | |
|---|---|---|---|---|

Routentabelle

| Kante | +Widerstand | +ROSA | +Nachfolgerkante | -Widerstand | -ROSA | -Nachfolgerkante |
|---|---|---|---|---|---|---|
| $k_1$ | ∞ | ∞ | - | ∞ | ∞ | - |
| $k_2$ | 10 | 10 | $+k_3$ | ∞ | ∞ | - |
| $k_3$ | 0 | 0 | - | 0 | 0 | - |

(fortgesetzt)

| Kante | +Widerstand | +ROSA | +Nachfolgerkante | -Widerstand | -ROSA | -Nachfolgerkante |
|---|---|---|---|---|---|---|
| $k_4$ | ∞ | ∞ | - | 30 | 0 | $+k_3$ |

Nun werden die Listen 1 und 2 vertauscht und die Liste 2 geleert. Der Schritt 2 beginnt mit einer Liste 1 mit folgendem Inhalt:

Liste 1 (Liste der bereits optimierten Kanten)

| $+k_2$ | $-k_4$ | | | |
|---|---|---|---|---|

In Schritt 2.1 werden alle Ankommer-Kanten der Kante $+k_2$ auf die ROSA-Optimierungsbedingung hin geprüft, wie auch in Fig. 8 illustriert, und es ergeben sich folgende ROSA-Optimierungsbedingungen sowie Inhalte der Routentabelle und der Liste 2:

$+k_1$: ∞ > 0 + 10 ROSA-Optimierungsbedingung erfüllt
$+k_4$: ∞ > 0 + 10 ROSA-Optimierungsbedingung erfüllt
$-k_2$: ∞ > 10 + 10 ROSA-Optimierungsbedingung erfüllt

Liste 2 (Liste der im nächsten Schritt zu prüfenden Kanten)

| $+k_1$ | $+k_4$ | $-k_2$ | | |
|---|---|---|---|---|

Routentabelle

| Kante | +Widerstand | +ROSA | +Nachfolgerkante | -Widerstand | -ROSA | Nachfolgerkante |
|---|---|---|---|---|---|---|
| $k_1$ | 20 | 10 | $+k_2$ | ∞ | ∞ | - |
| $k_2$ | 10 | 10 | $+k_3$ | 20 | 20 | - |
| $k_3$ | 0 | 0 | - | 0 | 0 | - |
| $k_4$ | 40 | 10 | $+k_2$ | 30 | 0 | $+k_3$ |

In einem nachfolgende Schritt 2.2 werden alle Ankommer-Kanten der Kante $-k_4$ auf die ROSA-Optimierungsbedingung hin geprüft, wie auch in Fig. 9 illustriert, und es ergeben sich folgende ROSA-Optimierungsbedingungen sowie Inhalte der Routentabelle und der Liste 2:

$+k_1$: 10 > 0 + 0 ROSA-Optimierungsbedingung erfüllt
$+k_4$: 10 > 0 + 0 ROSA-Optimierungsbedingung erfüllt
$-k_2$: 20 > 10 + 0 ROSA-Optimierungsbedingung erfüllt

Liste 2 (Liste der im nächsten Schritt zu prüfenden Kanten)

| $+k_1$ | $+k_4$ | $-k_2$ | | |
|---|---|---|---|---|

Routentabelle

| Kante | +Widerstand | +ROSA | +Nachfolgerkante | -Widerstand | -ROSA | -Nachfolgerkante |
|---|---|---|---|---|---|---|
| $k_1$ | 40 | 0 | $-k_4$ | ∞ | ∞ | - |
| $k_2$ | 10 | 10 | $+k_3$ | 40 | 10 | $-k_4$ |
| $k_3$ | 0 | 0 | - | 0 | 0 | - |
| $k_4$ | 60 | 0 | $-k_4$ | 30 | 0 | $+k_3$ |

In diesem Schritt wird die Auswirkung der ROSA-Optimierungsprüfung besonders deutlich: Die Ankommer-Kante $+k_1$ führte in dem Beispiel von Fig. 1 bis 5 über den Nachfolger $+k_2$ zum Ziel. Da jetzt aber bei Führung über $+k_4$ zum Ziel der ROSA-Wert von 10 auf 0 absinkt, wird aufgrund der erfüllten ROSA-Optimierungsbedingung die Kante $-k_4$ als Nachfolger in der Routentabelle vermerkt. Mit anderen Worten wird die Autobahn, wie gewünscht, vermieden, obwohl sich der Widerstand zum Ziel von 20 auf 40 erhöht.

Die ROSA-Optimierungsbedingung ist auch für die restlichen Ankommer-Kanten $-k_2$ und $+k_4$ erfüllt. Dadurch bekommt $-k_2$ als Nachfolgerkante anstatt $+k_2$ nun $-k_4$ (die Route führt dann von der Autobahn herunter, anstatt auf ihr zu wenden) und $+k_4$ bekommt als Nachfolgekante anstatt $+k_2$ nun $-k_4$.

Das Verfahren wird nun in analoger Weise mit Schritt 3 , 4 usw. fortgesetzt, bis am Beginn eines Iterationsschrittes die erste Liste leer ist.

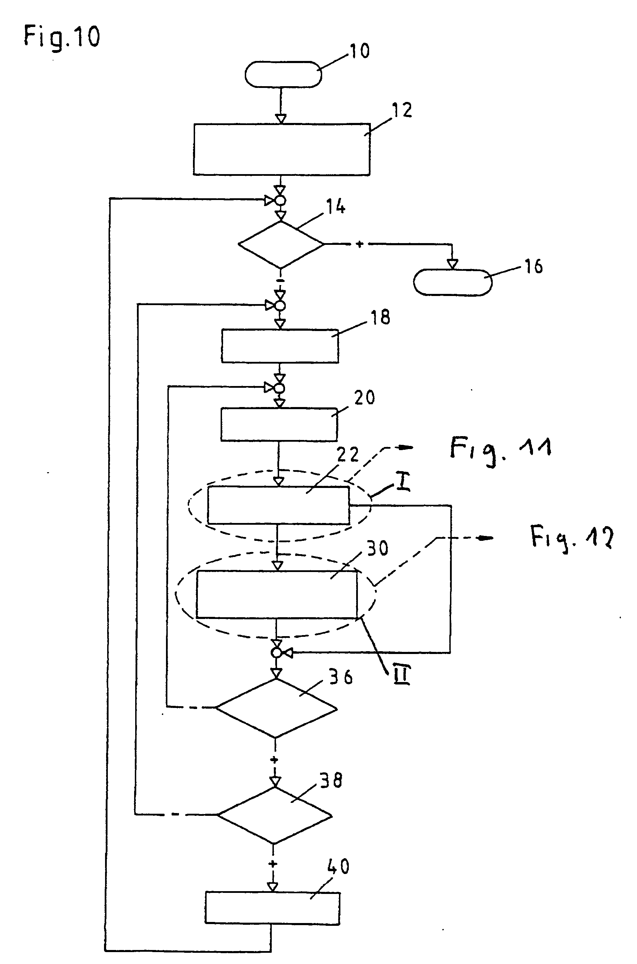

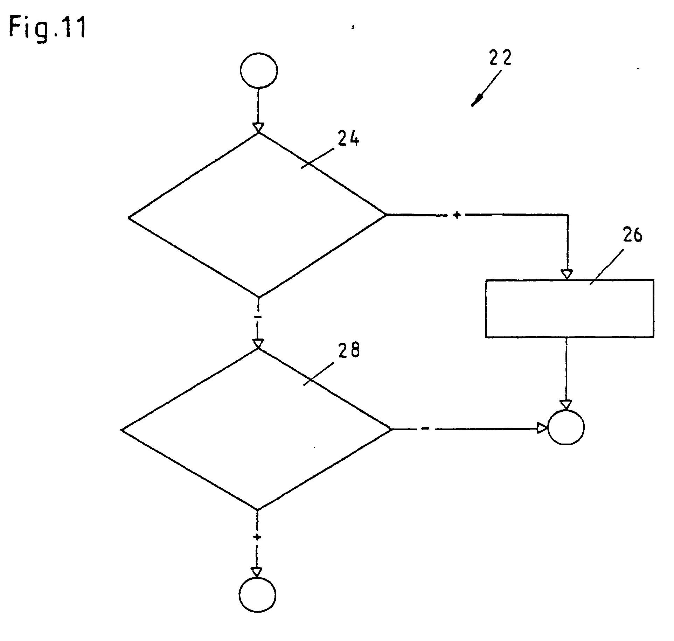

Die Figuren 10 bis 12 veranschaulichen in jeweiligen Flußdiagrammen das erfindungsgemäße Verfahren. Bei jeweiligen Ja/Nein-Abfragen ist die für ein positives Ergebnis "ja" geltende Verzweigung mit "+" und die jeweilige für die negative Antwort "nein" geltende Verzweigung mit "-" gekennzeichnet. sind. In Fig. 10 startet das Verfahren mit Schritt 10 und in Schritt 12 erfolgt eine Initialisierung, wobei die Zielkante in eine erste Liste aufgenommen und eine zweite Liste geleert wird. Ferner wird die Routentabelle initialisiert. Im nachfolgenden Schritt 14 wird geprüft, ob die erste Liste leer ist. Ist dies der Fall, so endet das Verfahren in Schritt 16. Ansonsten wird in Schritt 18 die nächste Kante aus der ersten Liste geholt und als Ist-Kante bestimmt. Danach wird in Schritt 20 eine noch nicht geprüfte Ankommer-Kante der in Schritt 18 bestimmten Ist-Kante ausgewählt und in Schritt 22 erfolgt eine ROSA-Optimierung, welche im Detail aus Fig. 11 ersichtlich ist. In Schritt 24 wird die ROSA-Optimierungsbedingung

$$\text{ROSA-Wert(Ankommer-Kante)} > \text{ROSA-Streckenwert(Ankommer-Kante)} + \text{ROSA-Wert(Ist-Kante)}$$

geprüft. Ist diese erfüllt, so wird in Schritt 26 die aktuell geprüfte Ankommer-Kante in die zweite Liste eingetragen und der ROSA-Wert sowie der Widerstandswert dieser Ankommer-Kante in der Routentabelle aktualisiert und schließlich die Ist-Kante als Nachfolgerkante der Ankommer-Kante eingetragen. Danach fährt das Verfahren mit dem nachfolgend erläuterten Schritt 36 fort.

Falls in Schritt 24 das Ergebnis "nein" lautet, wird in Schritt 28 geprüft, ob

$$\text{ROSA-Wert(Ankommer-Kante)} = \text{ROSA-Streckenwert(Ankommer-Kante)} + \text{ROSA-Wert(Ist-Kante)}$$

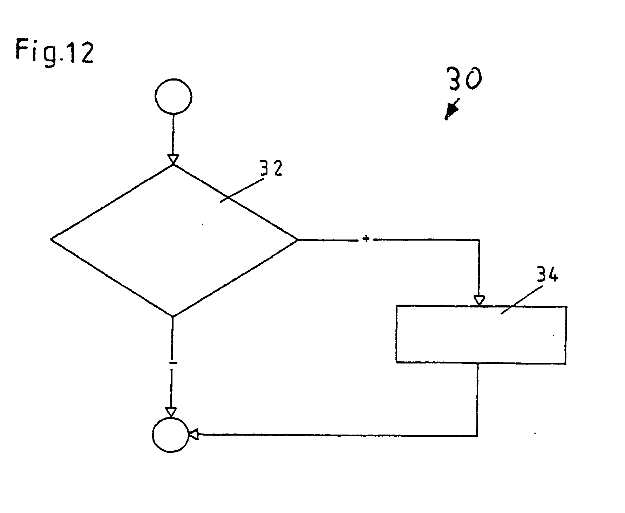

gilt. Ist dies nicht der Fall, so fährt das Verfahren abermals mit Schritt 36 fort, ansonsten erfolgt in einem nachfolgenden Schritt 30 eine Widerstandsoptimierungsprüfung. Diese ist im Detail aus Fig. 12 ersichtlich. In einem Schritt 32 wird geprüft, ob

$$\text{Widerstand(Ankommer-Kante)} > \text{Streckenwiderstand(Ankommer-Kante)} + \text{Widerstand(Ist-Kante)}$$

gilt. Falls das Ergebnis negativ ist, fährt das Verfahren in Schritt 36 fort, ansonsten wird in Schritt 34 die Ankommer-Kante in die zweite Liste eingetragen, der ROSA-Wert und der Widerstandswert in der Routentabelle aktualisiert und die Ist-Kante als Nachfolger eingetragen. Danach fährt das Verfahren mit Schritt 36 fort, in welchem geprüft wird, ob alle zu der momentanen Ist-Kante gehörenden Ankommer-Kanten bereits bearbeitet wurden. Falls dies nicht der Fall ist, verzweigt das Verfahren zu Schritt 20, ansonsten geht es mit Schritt 38 weiter, in dem geprüft wird, ob alle Kanten aus der ersten Liste geprüft wurden. Falls dies nicht der Fall ist, verzweigt das Verfahren zu Schritt 18, ansonsten werden in Schritt 40 die erste und die zweite Liste vertauscht und die neue zweite Liste geleert und zu Schritt 14 zurückgesprungen.

In möglichen alternativen Ausführungsformen erfolgt statt einer gemeinsamen Aufakkumulierung der zu meidenden Streckenanteilen eine getrennte Erfassung in separaten Zählern bzw. ROSA-Werten. Führt man beispielsweise eigene ROSA-Werte für Autobahn-, Maut- und Fährenlängenbestandteile der Route ein, so wird durch die Reihenfolge der dann notwendigen drei aufeinander folgenden ROSA-Optimierungsprüfungen die Priorität der zu meidenden Kategorien untereinander festgelegt. Hierbei ist die Priorisierung, d.h. die Reihenfolge der ROSA-Optimierungsprüfungen, fest vorgegeben oder vom Benutzer konfigurierbar vorbestimmt.

**Patentansprüche**

1. Verfahren zum Bestimmen einer Route von einem Ausgangspunkt zu einem Zielpunkt auf einem Routennetz, insbesondere einem Straßennetz, welches als gerichtete Kanten ($k_1$-$k_4$) und Knoten ($p_1$-$p_4$) in einem Speicher abgebildet ist, wobei jeder Kante ein Streckenwiderstand zugeordnet wird, wobei die Route als eine Reihe von Kanten derart bestimmt wird, daß die Summe aller Streckenwiderstände minimal wird,
**dadurch gekennzeichnet, daß**
jeder Kante zusätzlich wenigstens ein Verkehrswegeart-Streckenwert zugeordnet wird, wobei bei der Bestimmung der Route von einer Kante zur nächsten Kante primär der Verkehrswegeart-Streckenwert minimiert wird und lediglich in dem Fall, daß sich dieser Verkehrswegeart-Strekkenwert von einer Kante zur nächsten weder erhöht noch erniedrigt an dieser Stelle eine Minimierung des Streckenwiderstandes durchgeführt wird.

2. Verfahren nach Anspruch 1,
**dadurch gekennzeichnet, daß**
der Verkehrswegeart-Streckenwert die Summe aller Strecken angibt, auf der diese Kante eine vorbestimmte Verkehrswegeart aufweist, wie beispielsweise eine Autobahn, eine Landstraße, eine Fähre, eine Paßstraße, und/oder einen Tunnel und/oder ähnliches.

3. Verfahren nach Anspruch 1 oder 2,
**dadurch gekennzeichnet, daß**
der Verkehrswegeart-Streckenwert eine Häufigkeit von beispielsweise Verkehrsunfällen , von Radarfallen und/oder Ampeln erfaßt, welche einer Kante zugeordnet sind.

4. Verfahren nach einem der vorhergehenden Ansprüche,
**dadurch gekennzeichnet,**
**daß** der Verkehrswegeart-Streckenwert physikalische Eigenschaften einer Kante erfaßt wie beispielsweise einer Kante zugeordnete Schadstoffemissionenen.

5. Verfahren nach einem der vorhergehenden Ansprüche,
**dadurch gekennzeichnet,**
**daß** die einer Kante für die Erfassung im Verkehrswegeart-Streckenwert zugeordneten Eigenschaften mittels Verkehrstelematik direkt, beispielsweise von einem Serviceprovider online, beispielsweise via GSM, in ein Navigationsgerät eingespielt werden.

6. Verfahren nach Anspruch 5,
**dadurch gekennzeichnet, daß**
ein Polygon übertragen wird, das einen Bereich auf der digitalen Karte markiert, innerhalb dessen allen Kanten eine vorbestimmte Eigenschaft zugewiesen wird.

7. Verfahren nach einem der vorhergehenden Anspruche
**dadurch gekennzeichnet, daß**
die Berücksichtigung wenigstens eines Verkehrswegeart-Streckenwertes bei der Routenberechnung von einem Benutzer wahlweise aktiviert oder deaktiviert wird.

8. Verfahren nach einem der vorhergehenden Ansprüche,
**dadurch gekennzeichnet, daß**
die Routenberechnung iterativ ausgehend von der Zielkante erfolgt.

9. Verfahren nach Anspruch 8,
**gekennzeichnet durch** folgende Schritte

(A) Erstellen einer Routentabelle, in der für jede gerichtete Kante in Vorwärtsrichtung und Rückwärtsrichtung je ein Widerstand, je eine Nachfolgerkante und je ein Verkehrswegeart-Wert eintragbar ist,
(B) Setzen aller Widerstandswerte sowie aller Verkehrswegeart-Werte der Routentabelle auf unendlich und Löschen aller Nachfolgekanten,

(C) Setzen der Widerstandswerte und der Verkehrswegeart-Werte der Zielkante auf Null,

(D) Speichern der Zielkante in einer ersten Liste für bereits optimierte Kanten,

(E) Erstellen einer leeren zweiten Liste für im nächsten Schritt zu optimierende Kanten,

(F) Bestimmen, ob die erste Liste leer ist, wenn ja Beenden des Verfahrens,

(G) Setzen einer Kante aus der ersten Liste als Ist-Kante,

(H) Bestimmen aller mit der Ist-Kante vermaschten Kanten als Ankommer-Kanten,

(I) Bestimmen für alle Ankommer-Kanten ob eine Optimierungsbedingung

$$\text{Verkehrswegeart-Wert(Ankommer-Kante)} > \text{Verkehrswegeart-Streckenwert(Ankommer-Kante)} + \text{Verkehrswegeart-Wert(Ist-Kante)}$$

erfüllt ist, und wenn ja, Gehen zu Schritt (K), wenn nein, Gehen zu Schritt (L),

(K) Eintragen der jeweiligen Ankommer-Kante in die zweite Liste, Setzen des Widerstandswertes der jeweiligen Ankommer-Kante in der Routentabelle auf die Summe (Streckenwiderstand(Ankommer-Kante)+Widerstand (Ist-Kante)), Setzen des Verkehrswegeart-Wertes der jeweiligen Ankommer-Kante in der Routentabelle auf die Summe (Verkehrswegeart-Streckenwert(Ankommer-Kante)+ Verkehrswegeart-Wert(Ist-Kante)) und Eintragen der Ist-Kante als Nachfolgerkante der jeweiligen Ankommer-Kante, Gehen zu Schritt (M),

(L) Verwerfen der jeweiligen Ankommer-Kante, wenn

$$\text{Verkehrswegeart-Wert(Ankommer-Kante)} < \text{Verkehrswegeart-Streckenwert(Ankommer-Kante)} + \text{Verkehrswegeart-Wert(Ist-Kante)}$$

ist, oder wenn

$$\text{Verkehrswegeart-Wert(Ankommer-Kante)} = \text{Verkehrswegeart-Streckenwert(Ankommer-Kante)} + \text{Verkehrswegeart-Wert(Ist-Kante)}$$

ist, Bestimmen für die jeweilige Ankommer-Kante, ob eine Optimierungsbedingung

$$\text{Widerstand(Ankommer-Kante)} > \text{Streckenwiderstand(Ankommer-Kante)} + \text{Widerstand(Ist-Kante)}$$

erfüllt ist,

- wenn ja, Eintragen der jeweiligen Ankommer-Kante in die zweite Liste, Setzen des Widerstandswertes der jeweiligen Ankommer-Kante in der Routentabelle auf die Summe (Streckenwiderstand(Ankommer-Kante)+Widerstand(Ist-Kante)), Setzen des Verkehrswegeart-Wertes der jeweiligen Ankommer-Kante in der Routentabelle auf die Summe (Verkehrswegeart-Streckenwert(Ankommer-Kante)+ Verkehrswegeart-Wert(Ist-Kante)) und Eintragen der Ist-Kante als Nachfolgerkante der jeweiligen Ankommer-Kante,

- wenn nein, Verwerfen der Ankommer-Kante,

(M) Setzen einer anderen Kante aus der ersten Liste als Ist-Kante und Gehen zu Schritt (H) oder Gehen zu Schritt (N), wenn bereits alle in der ersten Liste enthaltenen Kanten als Ist-Kante gesetzt wurden,

(N) Vertauschen der ersten Liste mit der zweiten Liste, Leeren der zweiten Liste und Gehen zu Schritt (F).

**Claims**

1. Method for determining a route from a starting point to a destination on a route network, particularly a road network, which is mapped in the form of directional edges (k1-k4) and nodes (p1-p4) in a memory, wherein each edge is allocated a section resistance, the route being determined as a series of edges such that the sum of all section resistances becomes minimal,

**characterized in that**

each edge is additionally allocated at least one traffic-route-type section value, wherein determination of the route from one edge to the next edge primarily involves minimization of the traffic-route-type section value, and only if this traffic-route-type section value neither increases nor decreases from one edge to the next is the section resistance minimized at this point.

2. Method according to Claim 1,

   **characterized in that**

   the traffic-route-type section value indicates the sum of all sections on which this edge has a predetermined traffic route type, such as a motorway, a country road, a ferry, a mountain pass and/or a tunnel and/or the like.

3. Method according to Claim 1 or 2,

   **characterized in that**

   the traffic-route-type section value records a frequency of traffic accidents, of radar traps and/or traffic lights, for example, which are associated with an edge.

4. Method according to one of the preceding claims,

   **characterized**

   **in that** the traffic-route-type section value records physical properties of an edge, such as pollutant emissions associated with an edge.

5. Method according to one of the preceding claims,

   **characterized**

   **in that** the properties associated with an edge for recording in the traffic-route-type section value are loaded into a navigation appliance by means of traffic telematics directly, for example by a service provider online, for example using GSM.

6. Method according to Claim 5,

   **characterized in that**

   a polygon is transmitted which marks an area on the digital map within which all edges are assigned a predetermined property.

7. Method according to one of the preceding claims,

   **characterized in that**

   consideration of at least one traffic-route-type section value in the route calculation is either activated or deactivated by a user.

8. Method according to one of the preceding claims,

   **characterized in that**

   the route calculation is performed iteratively starting from the destination edge.

9. Method according to Claim 8,

   **characterized by** the following steps:

   (A) a route table, in which a respective resistance, a respective successor edge and a respective traffic-route-type value can be entered for each directional edge in the forward direction and the reverse direction, is created,
   (B) all resistance values and all traffic-route-type values in the route table are set to infinity and all successive edges are deleted,
   (C) the resistance values and the traffic-route-type values of the destination edge are set to zero,
   (D) the destination edge is stored in a first list for already optimized edges,
   (E) an empty second list is created for edges to be optimized in the next step,
   (F) it is determined whether the first list is empty, and if so then the method is terminated,
   (G) an edge from the first list is set as the actual edge,
   (H) all edges meshed with the actual edge are determined as arrival edges,
   (I) for all arrival edges, it is determined whether an optimization condition

```
traffic-route-type value (arrival edge) >

traffic-route-type section value (arrival edge) + traffic-route-type value (actual edge)
```

is met, and if so then the method moves to step (K) and if not then the method moves to step (L),
(K) the respective arrival edge is entered into the second list, the resistance value of the respective arrival edge in the route table is set to the sum (section resistance (arrival edge) + resistance (actual edge)), the traffic-route-type value of the respective arrival edge in the route table is set to the sum (traffic-route-type section value (arrival edge) + traffic-route-type value (actual edge)), and the actual edge is entered as successor edge for the respective arrival edge, and the method moves to step (M),
(L) the respective arrival edge is rejected if

```
traffic-route-type value (arrival edge) <

traffic-route-type section value (arrival edge) + traffic-route-type value (actual edge),
```

or if

```
traffic-route-type value (arrival edge) =

traffic-route-type section value (arrival edge) + traffic-route-type value (actual edge),
```

for the respective arrival edge, it is determined whether an optimization condition

```
resistance (arrival edge) >

section  resistance  (arrival  edge)  +  resistance
(actual edge)
```

is met,

- if so, the respective arrival edge is entered into the second list, the resistance value of the respective arrival edge in the route table is set to the sum (section resistance (arrival edge) + resistance (actual edge)), the traffic-route-type value of the respective arrival edge in the route table is set to the sum (traffic-route-type section value (arrival edge) + traffic-route-type value (actual edge)), and the actual edge is entered as successor edge for the respective arrival edge,
- if not, the arrival edge is rejected,

(M) another edge from the first list is set as the actual edge, and the method moves to step (H) or, the method moves to step (N) if all edges which the first list contains have already been set as an actual edge,
(N) the first list is interchanged with the second list, the second list is emptied and the method moves to step (F).

**Revendications**

1. Procédé pour déterminer un trajet à partir d'un point de départ vers un point de destination dans un réseau de voies de circulation notamment un réseau routier enregistré dans une mémoire sous la forme de segments dirigés ($k_1$-$K_4$) et de noeuds ($p_1$-$p_4$),
une résistance de trajet étant associée à chaque segment,
le trajet se détermine sous la forme d'une série de segments de façon que la somme de toutes les résistances de trajet soit minimale,

**caractérisé en ce qu'**
à chaque segment, on associe en plus au moins une valeur de segment de type de trajet,
et pour la détermination du trajet, pour passer d'un segment au segment suivant, on minimise principalement la valeur de trajet de type de voie de circulation, et
uniquement au cas où cette valeur de trajet de type de voie de circulation d'un segment au segment suivant n'augmente ni diminue, on effectue à cet endroit une minimisation de la résistance de trajet.

**2.** Procédé selon la revendication 1,
**caractérisé en ce que**
la valeur de trajet de tous les types de voie de circulation indique la somme de tous les trajets pour laquelle ce segment correspond à un type de voie de circulation prédéfini, comme par exemple une autoroute, une route nationale, un bac, une route de col et/ou un tunnel et/ou une voie de circulation analogue.

**3.** Procédé selon la revendication 1 ou 2,
**caractérisé en ce que**
la valeur de trajet de type de voie de circulation correspond à la fréquence par exemple d'accidents de circulation, d'emplacements de radar et/ou de feux rouges associés à un segment.

**4.** Procédé selon les revendications précédentes,
**caractérisé en ce que**
la valeur de trajet de type de voie de circulation contient les propriétés physiques d'un segment telles que par exemple les émissions de matières polluante correspondant à un segment.

**5.** Procédé selon les revendications précédentes,
**caractérisé en ce que**
les propriétés associées à un segment pour sa prise en compte dans la valeur de trajet de type de segment de voie de circulation sont fournies directement par un système de télématique de circulation, par exemple par un fournisseur de services en ligne tel que par exemple le système GSM à un appareil de navigation.

**6.** Procédé selon la revendication 5,
**caractérisé en ce qu'**
on transmet un polygone qui marque une zone sur la carte numérique à l'intérieur de laquelle tous les segments ont une propriété prédéfinie.

**7.** Procédé selon les revendications précédentes,
**caractérisé en ce que**
la prise en compte d'au moins une valeur de trajet de type de voie de circulation est sélectivement activée ou désactivée par l'utilisateur lors du calcul du trajet.

**8.** Procédé selon les revendications précédentes,
**caractérisé en ce que**
le calcul du trajet se fait de manière itérative en partant du segment de destination.

**9.** Procédé selon la revendication 8,
**caractérisé par**
les étapes suivantes:

(A) Etablissement d'un tableau de trajet dans lequel on enregistre une résistance respective pour chaque segment orienté dans la direction de marche avant et la direction de marche arrière, chaque fois un segment suivant et chaque fois une valeur de type de voie de circulation,
(B) On donne à toutes les valeurs de résistance ainsi qu'à toutes les valeurs de type de voie de circulation du tableau de trajet, la valeur infinie et on efface tous les segments suivants,
(C) On donne la valeur zéro aux valeurs de résistance et aux valeurs de type de voie de circulation du segment de destination,
(D) On enregistre le segment de destination dans une première liste pour des segments déjà optimisés,
(E) On établit une seconde liste vide pour les segments à optimiser dans l'étape suivante,
(F) On détermine si la première liste est vide et si la réponse est affirmative, on termine le procédé,
(G) On définit un segment de la première liste comme segment réel,

(H) On définit tous les segments maillés avec le segment réel comme étant des segments d'entrée,

(I) On détermine pour tous les segments d'entrée si une condition d'optimisation est remplie: valeur du type de voie de circulation (segment d'entrée) supérieure à la valeur de segment de type de voie de circulation (segment d'entrée) plus valeur de type de voie de circulation (segment réel) et si cette condition est remplie (réponse affirmative), on passe à l'étape (K); si la réponse est négative, on passe à l'étape (L),

(K) Enregistrement du segment d'entrée respectif dans la seconde liste, mise de la valeur de résistance du segment d'entrée respectif dans le tableau de trajet sur la somme [résistance de segment (segment d'entrée) + résistance (segment réel)], mise à l'état de la valeur du type de voie de circulation pour le segment d'entrée respectif dans le tableau de trajet sur la somme [valeur de trajet de type à voie de circulation (segment d'entrée) + valeur de voie de circulation (segment réel)] et enregistrement du segment réel comme segment suivant du segment d'entrée respectif, et passage à l'étape (M),

(L) Rejet du segment d'entrée respectif si

Valeur du type de voie de circulation (segment d'entrée) inférieure à Valeur de trajet de type de voie de circulation (segment d'entrée) + Valeur de type de voie de circulation (segment réel)

ou si

Valeur de type de voie de circulation (segment d'entrée) = valeur de trajet de type de voie de circulation (segment d'entrée) + valeur de type de voie de circulation (segment réel), en déterminant pour le segment d'entrée respectif si une condition d'optimisation est remplie: résistance (segment d'entrée) supérieure à résistance de trajet (segment d'entrée) + résistance (segment réel),

et

- Si la réponse est positive, enregistrement du segment d'entrée respectif dans la seconde liste, mise de la valeur de résistance du segment d'entrée respectif dans le tableau de trajet sur la somme (valeur de la résistance de trajet (à l'intérieur segment d'entrée) + résistance (segment réel)), inscription de la valeur de type de voie de circulation du segment d'entrée respectif dans le tableau de trajet sur la somme (valeur de trajet de type de voie de circulation (segment d'entrée) + valeur de type de voie de circulation (valeur réelle)), et enregistrement du segment réel comme segment suivant du segment d'entrée respectif,

- Si la réponse est négative, rejet du segment d'entrée,

(M) Enregistrement d'un autre segment de la première liste comme segment réel et passage à l'étape (H) ou Passage à l'étape (N) si déjà tous les segments contenus dans la première liste ont été enregistrés comme segments réels,

(N) Echange de la première liste avec la seconde liste, mise à la corbeille de la seconde liste et passage à l'étape (F).

Fig.1

Fig. 2

Fig. 3

Fig.4

Fig.5

Fig.6

Fig.7

Fig.8

Fig.9

Fig.10

Fig. 11

Fig. 12

Fig.11

Fig.12

**EP 0 979 987 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4984168 A